# EUROPÄISCHE PATENTSCHRIFT

(11) **EP 2 639 203 B1**
(45) Veröffentlichungstag und Bekanntmachung des Hinweises auf die Patenterteilung: **10.10.2018**
(21) Anmeldenummer: 13158848.5
(22) Anmeldetag: 12.03.2013
(51) Int. Cl.: C02F 1/44

(54) **VORRICHTUNG UND VERFAHREN ZUM BETREIBEN EINER MEMBRANTRENNVORRICHTUNG**
DEVICE AND METHOD FOR OPERATING A MEMBRANE SEPARATION APPARATUS
DISPOSITIF ET PROCÉDÉ DE FONCTIONNEMENT D'UN APPAREIL DE SÉPARATION À MEMBRANES

(30) Priorität: 14.03.2012 DE 102012204011
(43) Veröffentlichungstag der Anmeldung: 18.09.2013
(73) Patentinhaber: BWT AKTIENGESELLSCHAFT, 5310 Mondsee (AT)
(72) Erfinder: Pavan, Andrea, 35013 Cittadella - PD (IT); Johann, Jürgen, Dr., 69226 Nussloch (DE); Fink, Marc, 79540 Lörrach (DE)
(74) Vertreter: Patentanwaltskanzlei Cartagena

(56) Entgegenhaltungen:
- EP-A2- 0 599 281
- EP-A2- 1 440 726
- DE-A1- 3 106 772
- DE-A1- 4 331 102
- DE-A1-102009 040 049
- DE-C1- 19 520 914
- US-A1- 2007 295 650

## Beschreibung

Die Erfindung betrifft ein Verfahren zum Betreiben einer Membrantrennvorrichtung und eine Vorrichtung zum Betreiben einer Membrantrennvorrichtung im Durchflussverfahren.
Als Membrantrennvorrichtung wird im Zusammenhang mit der Anmeldung eine Trennvorrichtung bezeichnet, durch welche eine Zulaufflüssigkeit, auch als Feed, Zulauf oder Speisewasser bezeichnet, mittels einer Membran in ein Konzentrat und ein Permeat aufgetrennt wird. Das zugehörige Verfahren wird als Membrantrennverfahren oder Membranverfahren bezeichnet.
Zu den Membrantrennverfahren gehören die Umkehrosmose sowie die Ultra-, Nano- und Hyperfiltration, ggf. auch in Kombination.
Membrantrennverfahren sind für verschiedenste Anwendungen beispielsweise aus EP 0 599 281 A2, EP 0 394 777 A2, EP 0 394 777 A3, DE 31 06 772 A1, US 2007/0295650 A1 und/oder EP 1 440 726 A2 bekannt.
Membrantrennverfahren werden beispielsweise zur Aufbereitung von Wasser, insbesondere zur Entsalzung von Wasser, eingesetzt. Die Aufbereitung von Wasser ist in der heutigen Zeit von stets steigender Bedeutung. Neben einer Aufbereitung von Wasser als Trinkwasser werden insbesondere in der chemischen und pharmazeutischen Industrie hochreine Prozesswässer benötigt, die in großer Menge möglichst preiswert bereitgestellt werden müssen. Hochreines Wasser wird weiter auch in der Halbleiterindustrie benötigt, beispielsweise zur Spülung von Siliziumwafern, insbesondere nach Ätzprozessen. Die Anforderungen an die Reinheit des Wassers sind in diesem Bereich in der Regel sehr hoch.

Das Membrantrennverfahren ist mit anderen Verfahren zur Vorbehandlung der Zulaufflüssigkeit und/oder zur Nachbehandlung des Permeats und/oder des Konzentrats kombinierbar. Beispielsweise ist es bekannt, einen Verfahrensablauf noch um einen Entgasungsschritt vor oder nach dem Membrantrennverfahren zu ergänzen, wenn in einem als Zulaufflüssigkeit verwendeten Rohwasser größere Mengen an gelöstem Kohlendioxid vorhanden sind.
Mittels des Membrantrennverfahrens und/oder der Membrantrennvorrichtung wird ein Volumenstrom der aufzubereitenden Zulaufflüssigkeit in zwei Teilströme, nämlich ein Konzentrat und ein Permeat aufgetrennt. Die Menge eines Permeats wird im Zusammenhang mit der Anmeldung als Permeat-Leistung oder kurz Leistung der Membrantrennvorrichtung bezeichnet. Das Verhältnis der Teilströme zueinander wird als Ausbeute bezeichnet. Insbesondere wird das Verhältnis des Volumenstroms des Permeats zu dem Volumenstrom des Konzentrats im Zusammenhang mit der Anmeldung als Permeat-Ausbeute bezeichnet.
Aufgrund von Änderungen von Einflussgrößen, wie alterungsbedingten Änderungen einer Permeabilität verwendeter Membranen, Druckschwankungen, Temperaturschwankungen und/oder Konzentrationsschwankungen der Zulaufflüssigkeit, kann es zu Änderungen in der Permeat-Leistung und/oder der Permeat-Ausbeute beim Betreiben einer Membrantrennvorrichtung ohne Änderung der Betriebsparameter kommen.
Aus EP 0 599 281 A2 ist es beispielsweise bekannt, eine Salzkonzentration eines austretenden Permeats und/oder einer der Membrantrennvorrichtung zugeführten Flüssigkeit zu messen und anhand der Messergebnisse ein rezirkulierter Anteil des Konzentrats und/oder des Permeats eingestellt wird, um so einen die Membran schonenden Betrieb zu ermöglichen.
US 2007/0295650 A1 beschreibt einen PID-Regler zur Reglung einer Durchflussmenge eines Permeatstroms bei variablen Rahmenbedingungen auf einen Soll-Wert, wobei zu diesem Zweck ein Druck verändert wird. Aus EP1440726A ist eine Druckregelung bekannt, bei der eine Veränderung des Drucks in Abhängigkeit von der Qualität des Permeats vorgenommen wird. DE19520914C und DE102009040049A lehren die Variation der Durchflussmenge des Konzentratstroms, um ein konstantes Verhältnis zwischen Rohwasserstrom und Konzentratstrom zu erzielen, bzw. den Strömungsquerschnitt der Konzentratleitung zu verändern, um den Permeatfluss so zu ändern, dass ein Permeattank immer gefüllt bleibt.

Es ist eine Aufgabe der Erfindung, ein Verfahren zum Betreiben einer Membrantrennvorrichtung und eine Vorrichtung zum Regeln und/oder Steuern einer Membrantrennvorrichtung zu schaffen, durch welche derartige Änderungen der Einflussgrößen kompensierbar sind.
Diese Aufgabe wird gelöst durch die Gegenstände mit den Merkmalen der Ansprüche 1 und 7.
Die Aufgabe wird insbesondere gelöst durch ein Verfahren zum Betreiben einer Membrantrennvorrichtung im Durchflussverfahren, in welcher eine Zulaufflüssigkeit in der Membrantrennvorrichtung in ein Konzentrat und ein Permeat aufgetrennt wird, wobei eine Durchflussmenge des Permeats und/oder eine Permeat- Ausbeute von mindestens einer im Betrieb variablen Einflussgröße beeinflusst wird, die Durchflussmenge des Permeats und/oder die Permeat-Ausbeute auf einen Soll-Wert reguliert wird, und zur Kompensation einer Änderung der mindestens einen variablen Einflussgröße die Durchflussmenge des Konzentrats variiert wird, um die Durchflussmenge des Permeats auf den Soll-Wert zu regulieren und/oder um die Permeat-Ausbeute auf einen Soll-Wert zu regulieren.
Die Teilströme sind bei einem Membrantrennverfahren ein Permeatstrom und ein Konzentratstrom, kurz Permeat und Konzentrat.
Als Durchfluss oder Durchflussmenge eines Teilstroms, d.h. des Konzentratstroms oder des Permeatstroms, wird eine Menge, d.h. ein Volumen oder eine Masse, des Konzentrats bzw. des Permeats pro Zeit bezeichnet. Vorzugsweise wird als Durchflussmenge ein Volumenstrom, d.h. das Volumen pro Zeit, bezeichnet. Als Permeat-Ausbeute wird ein Volumenstrom-Verhältnis des Permeats zu dem Konzentrat bezeichnet. Die Durchflussmenge des Permeats und die Durchflussmenge des Konzentrats hängen aufgrund der Massenstrombilanz und der Volumenstrombilanz voneinander ab.

Erfindungsgemäß wird eine Durchflussmenge des Konzentrats zur Regulierung einer Durchflussmenge des Permeats auf einen Soll-Wert und/oder zur Regulierung einer Permeat- Ausbeute auf einen Soll-Wert variiert.

Durch Variation der Durchflussmenge des Konzentrats sind somit die Permeat-Leistung und/oder die Permeat-Ausbeute unter Kompensation äußerer Einflüsse auf einen konstanten Soll-Wert bringbar. Insbesondere sind dabei Änderungen von Einflussgrößen im Betrieb wie alterungsbedingte Änderungen einer Permeabilität einer verwendeten Membran, Druckschwankungen, Temperaturschwankungen und/oder Konzentrationsschwankungen einer Zulaufflüssigkeit, kompensierbar.

Als Regulierung oder Regulieren wird im Zusammenhang mit der Anmeldung eine Steuerung und/oder eine Regelung bzw. ein Steuern und/oder Regeln bezeichnet.

Als Steuerung (Engl. open-loop control) wird im Zusammenhang mit der Anmeldung eine Veränderung mindestens einer Eingangsgröße eines Systems zur Veränderung mindestens einer Ausgangsgröße bezeichnet, wobei keine Rückkopplung einer tatsächlichen Ausgangsgröße direkt oder indirekt für die Bestimmung der mindestens einen Eingangsgröße erfolgt. In einer Ausgestaltung des Verfahrens wird eine aus Vergleichsmessungen oder dergleichen bekannte Veränderung einer Permeabilität einer verwendeten Membran über eine Betriebsdauer durch eine entsprechende Veränderung der Durchflussmenge des Konzentrats über die Betriebsdauer ohne Notwendigkeit zusätzlicher Sensoreinrichtungen kompensiert.

Als Regelung (Engl. closed-loop control) wird im Zusammenhang mit der Anmeldung eine Veränderung mindestens einer Eingangsgröße des Systems unter Rückführung einer Messgröße bezeichnet. Eine Regelgenauigkeit hängt dabei unter anderem von einer Messgrößengenauigkeit der erfassten Messgrößen ab. Bei einer Regelung sind Änderungen von Einflussgrößen ohne weitere Kenntnis der Einflussgrößen kompensierbar. Beispielsweise sind so nicht im Vorfeld bekannte Veränderungen einer Permeabilität einer Membran und deren Auswirkung auf eine Permeat-Ausbeute durch Anpassung der Durchflussmenge des Konzentrats ausgleichbar.

Die Durchflussmenge des Konzentrats wird mittels einer Sensoreinrichtung und die Durchflussmenge des Permeats wird mittels einer Sensoreinrichtung erfasst.

Die erfasste Durchflussmenge, insbesondere ein Volumenstrom eines Teilstroms, ist mit einem Soll-Wert vergleichbar und zur Erzielung des Soll-Werts die Durchflussmenge direkt durch ein Stellglied oder indirekt durch Variation des anderen Teilstroms veränderbar. In einer Ausgestaltung des Verfahrens wird der Volumenstrom des Konzentrats mittels einer ersten Sensoreinrichtung erfasst. Der erfasste Ist-Wert der Durchflussmenge des Konzentrats ist mit einem Soll-Wert vergleichbar und zur Erzielung des Soll-Werts die Durchflussmenge des Konzentrats veränderbar. Dadurch wird indirekt die Permeat-Leistung geregelt. Die Durchflussmenge, insbesondere der Volumenstrom, des Permeats wird mittels einer zweiten Sensoreinrichtung erfasst. Der erfasste Ist-Wert der Durchflussmenge des Permeats ist mit einem Soll-Wert vergleichbar und zur Erzielung des Soll-Werts die Durchflussmenge des Konzentrats veränderbar. Durch Erfassen des Volumenstrom des Permeats und des Konzentrats ist die Permeat-Ausbeute, auch als Water Conversion Factor WCF bezeichnet, ermittelbar und zur Erzielung eines Soll-Werts der Permeat-Ausbeute die Durchflussmenge des Konzentrats veränderbar.
Die Permeat-Ausbeute ist unter anderem auch abhängig von einer Reinheit oder Qualität der Zulaufflüssigkeit, auch als Rohwasserqualität bezeichnet, und/oder einer Vorbehandlung der Zulaufflüssigkeit. Eine Regelung der Permeat-Ausbeute ermöglicht daher eine Anpassung der Permeat-Ausbeute an eine im Vorfeld nicht bekannte Qualität der Zulaufflüssigkeit an einem Installationsort der Membrantrennvorrichtung im Rahmen der Messgrößengenauigkeit.

Die Durchflussmenge des Konzentrats wird mittels eines ansteuerbaren Stellglieds, insbesondere eines ansteuerbaren Ventils, variiert. Dadurch ist eine Anpassung ohne manuelle Eingriffe möglich. Das in der Membrantrennvorrichtung gewonnene Permeat und/oder das Konzentrat werden in einer Ausgestaltung nachbehandelt oder rezirkuliert.

Die erfindungsgemäße Vorrichtung umfasst eine Regelvorrichtung für eine im Durchflussverfahren betriebene Membrantrennvorrichtung, wobei eine Zulaufflüssigkeit in der Membrantrennvorrichtung ein Konzentrat und Permeat auftrennbar ist und eine Durchflussmenge des Permeats und/oder eine Permeat-Ausbeute von mindestens einer im Betrieb variablen Einflussgröße abhängig ist, wobei an der Regelvorrichtung ein Soll-Wert für die Durchflussmenge Permeats und/oder die Permeat-Ausbeute vorgebbar ist und wobei die Regelvorrichtung zur Kompensation einer Änderung der mindestens einen variablen Einflussgröße eine Steuereinheit zum Generieren eines Stellsignals für eine Durchflussmenge des Konzentrats umfasst, um die Durchflussmenge des Permeats auf den Soll-Wert zu regulieren und/oder um die Permeat-Ausbeute auf den Soll-Wert zu regulieren.
Als Steuereinheit wird im Zusammenhang mit der Anmeldung eine elektronische Einheit bezeichnet, mittels welcher Stellsignale zum Steuern oder Regeln einer der Steuereinheit zugeordneten Vorrichtung generierbar, insbesondere berechenbar sind. Die Steuereinheit ist beispielsweise als integrierter Schaltkreis gestaltet oder umfasst einen integrierten Schaltkreis.
Als Regelvorrichtung wird im Zusammenhang mit der Anmeldung eine Baugruppe umfassend die Steuereinheit bezeichnet, wobei die Regelvorrichtung je nach Anforderung zum Regeln oder Steuern von Vorgängen gestaltet ist. Mit der Regelvorrichtung ist es somit möglich, Volumenströme oder Volumenstromverhältnisse entsprechend einer Voreinstellung auf Soll-Werte zu regeln und/oder zu steuern.
In vorteilhaften Ausgestaltungen ist an der Steuereinheit ein Soll-Volumenstrom und/oder eine Soll-Ausbeute des Permeats zumindest innerhalb von technisch bedingten Grenzwerten der Membrantrennvorrichtung vorgebbar und das Stellsignal für den ersten Teilstrom in Abhängigkeit dieser Soll-Werte generierbar.

In der Regelvorrichtung ist mindestens eine Sensoreinrichtung zum Erfassen der Durchflussmenge des Permeats und eine Sensoreinrichtung zum Erfassen der Durchflussmenge des Konzentrats vorgesehen. Die erste und die zweite Sensoreinrichtung sind zur Erfassung der Durchflussmenge, insbesondere eines Volumenstroms, jeweils geeignet gestaltet. In vorteilhaften Ausgestaltungen ist jeweils ein Flügelrad-Zähler als Sensoreinrichtung vorgesehen. In anderen Ausgestaltungen sind zwei unterschiedlich gestaltete Sensoreinrichtungen für das Konzentrat und das Permeat vorgesehen.
Das Stellsignal ist in einer Ausgestaltung optisch und/oder akustisch an einer Benutzerschnittstelle anzeigbar, wobei ein Nutzer mittels des angezeigten Stellsignals eine Einstellung manuell vornimmt. In einer vorteilhaften Ausgestaltung der Regelvorrichtung ist ein mittels des Stellsignals ansteuerbares Stellglied, insbesondere ein ansteuerbares Ventil, zum Variieren der Durchflussmenge des ersten Teilstroms vorgesehen. Das mittels der Regelvorrichtung generierte Stellsignal wird auf geeignete Weise drahtlos oder drahtgebunden an das Stellglied übertragen. Das Stellglied ist vorzugsweise als Ventil, insbesondere als Nadelventil gestaltet. Durch Ventile ist eine Durchflussmenge präzise einstellbar.

Die Aufgabe wird weiter gelöst durch eine Vorrichtung nach Anspruch 1 zum Betreiben einer Membrantrennvorrichtung im Durchflussverfahren, wobei eine Zulaufflüssigkeit in der Membrantrennvorrichtung in ein Konzentrat und ein Permeat auftrennbar ist, umfassend einen Grundkörper mit mindestens einem ersten, von dem Konzentrat durchströmbaren Kanal und eine Regelvorrichtung zur Steuerung und/oder Regelung einer Durchflussmenge des Permeats und/oder einer Permeat-Ausbeute auf einen Soll-Wert mit einer Steuereinheit zum Generieren eines Stellsignals für eine Durchflussmenge des Konzentrats.
Die Vorrichtung ist als Baueinheit an einer Membrantrennvorrichtung, beispielsweise einer Wasseraufbereitungsanlage und/oder einer Entsalzunganlage und/oder an entsprechenden Geräten montierbar und/oder in diese integrierbar. Der Grundkörper weist im Bereich des Kanals ein Fitting auf, mittels welchem eine von der Membrantrennvorrichtung kommende Leitung, insbesondere eine Leitung des Konzentrats, anschließbar ist.

Ein mittels des Stellsignals ansteuerbares Stellglied, insbesondere ein ansteuerbares Ventil, ist zum Variieren des Konzentrats in dem mindestens einen ersten Kanal vorgesehen. Mittels des Ventils ist eine Durchflussmenge des Konzentrats durch den Kanal veränderbar.

Es ist mindestens eine Sensoreinrichtung zum Erfassen der Durchflussmenge des Konzentrats in dem mindestens einen ersten Kanal vorgesehen. Die Sensoreinrichtung umfasst in einer Ausgestaltung ein in dem Kanal angeordnetes Flügelrad. In anderen Ausgestaltungen ist alternativ oder zusätzlich ein nach einem anderen Messprinzip arbeitender Durchflusssensor als Sensoreinrichtung vorgesehen. Beispielhaft aber nicht abschließend ist in möglichen Ausgestaltungen eine Erfassung mittels einem unmittelbaren Volumenzähler, einem Ultraschalldurchflusssensor, einem Wirbeldurchflusssensor und/oder einem magnetisch induktiven Durchflusssensor vorgesehen.

Der Grundkörper weist mindestens einen zweiten, von dem Permeat durchströmbaren Kanal auf, wobei mindestens eine zweite Sensoreinrichtung zum Erfassen der Durchflussmenge des Permeats in dem mindestens einen zweiten Kanal vorgesehen ist. Dabei wird eine kompakte Baueinheit geschaffen, durch welche eine Permeat-Ausbeuteerfassbar und durch Veränderung der Durchflussmenge des Konzentrats auf einen gewünschten Wert regelbar ist.
In einer vorteilhaften Ausgestaltung weist der mindestens eine zweite Kanal einen Anschluss für das Permeat, einen zweiten Anschluss für die Zulaufflüssigkeit und ein Mischventil, insbesondere ein ansteuerbares Mischventil, auf. Dadurch ist es möglich, das Permeat für bestimmte Anwendungszwecke mit der Zulaufflüssigkeit zu verschneiden. Mindestens dem Anschluss für Permeat ist dabei in vorteilhaften Ausgestaltungen ein Rückschlagventil zugeordnet, um ein Rückströmen zu verhindern. In einigen Ausgestaltungen wird das Mischventil so eingestellt, insbesondere angesteuert oder geregelt, dass ein Verschnitt aus Permeat und Zulaufflüssigkeit bestimmte Soll-Werte erfüllt. Als Soll-Werte sind in einer Ausgestaltung eine Durchflussmenge des Verschnitts vorgegeben. In anderen Ausgestaltungen sind Eigenschaften des Verschnitts, beispielsweise eine Konzentration eines ausgefilterten Stoffs als Soll-Wert vorgegeben. In einer vorteilhaften Ausgestaltung erfolgt ein Einstellen des Mischventils derart, dass eine Leitfähigkeit des Permeats, oder bei einem Verschneiden eine Leitfähigkeit des Verschnitts, auf einen Soll-Wert geregelt oder gesteuert wird.

Mindestens einem Kanal, vorzugsweise dem zweiten Kanal, ist eine lonenkonzentration-Sensoreinrichtung zur Erfassung einer lonenkonzentration zugeordnet. Eine Leitfähigkeit eines Fluids hängt unter anderem von der lonenkonzentration ab. Als lonenkonzentration-Sensoreinrichtung ist in vorteilhaften Ausgestaltungen ein Leitfähigkeitsdetektor zur Bestimmung von ionischen Verbindungen eingesetzt, mit dem eine Leitfähigkeit des Teilstroms erfassbar ist. Eine Erfassung der lonenkonzentration erfolgt dabei in vorteilhaften Ausgestaltungen unabhängig von einem Verschneiden des Permeats. Vorzugsweise erfolgt die Erfassung stromabwärts des Mischventils.

In einer weiteren Ausgestaltung ist mindestens einem Kanal, vorzugsweise dem zweiten Kanal, eine Druck-Sensoreinrichtung zur Erfassung eines Drucks zur druckabhängigen Ein- und Ausschaltung der Membrantrennvorrichtung zugeordnet. Zum Betreiben der Membrantrennvorrichtung ist die Einhaltung einer Druckdifferenz zwischen Zulaufflüssigkeit und Permeat zwingend. Durch Erfassen des Drucks ist unter Verwendung der erfindungsgemäßen Vorrichtung eine druckabhängige Ein- und Ausschaltung der Membrantrennvorrichtung möglich.

In einer weiteren Ausgestaltung der Vorrichtung ist mindestens eine Benutzerschnittstelle zur Eingabe und/oder Anzeige von Soll- und/oder Ist-Werten betreffend das Konzentrat und/oder das Permeat vorgesehen. Die Benutzerschnittstelle ermöglicht somit eine einfache Bedienung der Membrantrennvorrichtung über die Vorrichtung. Die Benutzerschnittstelle ist in einer Ausgestaltung an dem Grundkörper vorgesehen. In anderen Ausgestaltungen ist die Benutzerschnittstelle mit dem Grundkörper zum Datenaustausch drahtlos oder drahtgebunden verbunden. Erfindungsgemäß wird die Vorrichtung zur Regelung der Permeat-Ausbeute unter Variation der Durchflussmenge des Konzentrats verwendet. Eine Voreinstellung eines Sollwertes der Permeat-Ausbeute erfolgt dabei direkt über die Benutzerschnittstelle, beispielsweise ein Gerätedisplay. In vorteilhaften Ausgestaltungen wird neben dem Sollwert an dem Gerätedisplay auch der aktuelle Istwert angezeigt. Dadurch ist ein Nutzer in einer manuellen Einstellung der Membrantrennvorrichtung unterstützbar und/oder eine automatische Einstellung der Membrantrennvorrichtung durch einen Nutzer überwachbar.

Weitere Vorteile der Erfindung ergeben sich aus den Unteransprüchen und aus der nachfolgenden Beschreibung eines Ausführungsbeispiels der Erfindung, das in den Zeichnungen schematisch dargestellt ist. Für gleiche oder ähnliche Bauteile werden in den Zeichnungen einheitliche Bezugszeichen verwendet.

In den Zeichnungen zeigen:
- Fig. 1:: eine Explosionsdarstellung einer Ausgestaltung der erfindungsgemäßen Vorrichtung und
- Fig. 2:: eine Draufsicht auf einen Grundkörper der Vorrichtung gemäß Fig. 1.

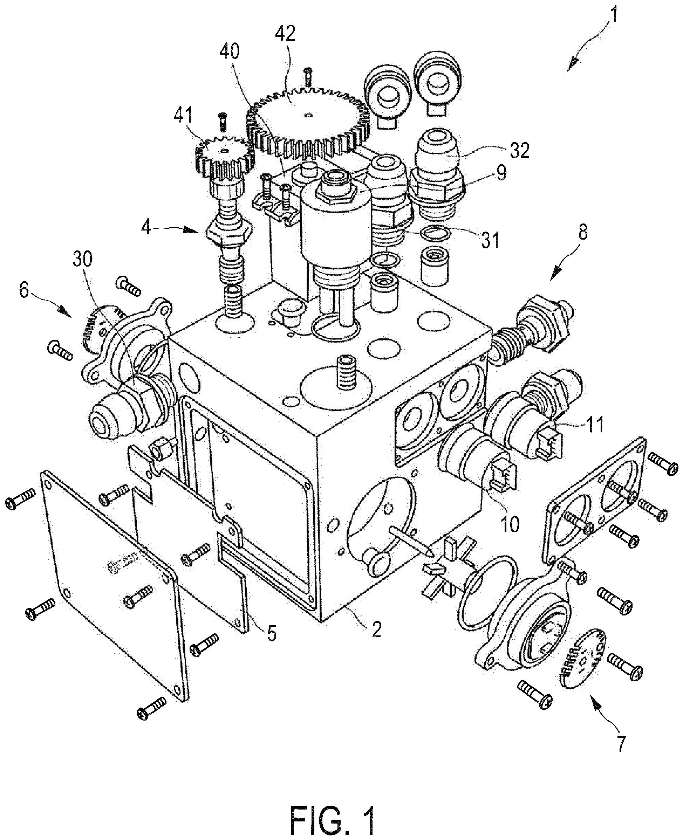

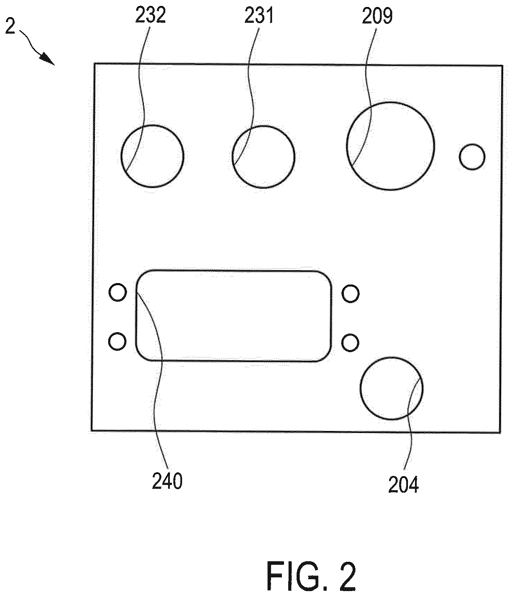

Fig. 1 zeigt schematisch in einer Explosionsdarstellung eine Ausgestaltung der erfindungsgemäßen Vorrichtung 1 zum Betreiben einer nicht dargestellten Membrantrennvorrichtung. Die dargestellte Vorrichtung 1 umfasst einen Grundkörper 2. Fig. 2 zeigt den Grundkörper 2 gemäß Fig. 1 in einer Draufsicht. Der Grundkörper 2 ist beispielsweise aus Kunststoff gefertigt und wird auch als Kunststoffblock bezeichnet.

In der Membrantrennvorrichtung wird eine Zulaufflüssigkeit in ein Permeat und ein Konzentrat aufgetrennt. Der dargestellte Grundkörper 2 weist zwei darin integrierte, in den Figuren nicht sichtbare, durchströmbare Kanäle auf. An einen ersten Kanal ist mittels eines Fittings 30 ein Konzentratstrom, auch als Abwasserstrom bezeichnet, anschließbar. An den zweiten Kanal sind mittels Fittings 31, 32 ein Permeatstrom und eine Zulaufflüssigkeit der nicht dargestellten Membrantrennvorrichtung anschließbar.

In dem im Betrieb von einem Konzentrat durchströmten ersten Kanal ist ein Stellglied 4 mit einem dem Stellglied zugeordneten Stellmotor 40 angeordnet. In dem dargestellten Ausführungsbeispiel handelt es sich bei dem Stellglied 4 um ein Nadelventil. Das Stellglied 4 ist mit dem Stellmotor 40 für einen Antrieb mechanisch mittels Zahnräder 41, 42 gekoppelt. Über den Stellmotor 40 ist eine Stellgröße, wie ein Hub, eine Öffnung, eine Umdrehung etc. des Stellglieds 4 veränderbar. Über den Stellmotor 40 und das Stellglied 4 wird so eine Änderung des Öffnungsgrades des ersten Kanals und damit eine Variation der Durchflussmenge durch den Kanal bewirkt.

Das Stellsignal für den Stellmotor 40 wird mittels einer Steuereinheit 5 ermittelt. In dem dargestellten Ausführungsbeispiel erfolgt eine Ermittlung des Stellsignals mittels einer Regelung.

In dem im Betrieb von einem Konzentrat durchströmten ersten Kanal ist hierfür eine erste Sensoreinrichtung 6 angeordnet, mittels der ein IstWert der Durchflussmenge an Konzentrat, insbesondere ein Volumenstrom des Konzentrats, messbar ist. Der von der Sensoreinrichtung 6 erfasste Wert wird an die Steuereinheit 5 übertragen.

In dem dargestellten Ausführungsbeispiel ist weiter eine zweite Sensoreinrichtung 7 in dem im Betrieb von einem Permeat durchströmten zweiten Kanal angeordnet, mittels welchem ein Ist-Wert der Durchflussmenge an Permeat, insbesondere ein Volumenstrom des Permeats, messbar ist. Das erfasste Signal ist ebenfalls an die Steuereinheit 5 übertragbar.

In der Steuereinheit 5 wird in Abhängigkeit eines vorgegebenen Volumenstromverhältnis von Permeat zu Konzentrat, auch als Permeat-Ausbeute bezeichnet, sowie der gemessenen Ist-Werte der Volumenströme des Permeats und des Konzentrats, das Stellsignal für den Stellmotor 40 generiert und der Volumenstrom des Konzentrats zur Erzielung der vorgegebenen Permeat-Ausbeute variiert. Eine Permeat-Ausbeute hängt von verschiedenen Einflussgrößen, wie beispielsweise der Permeabilität einer verwendeten Membran, einem Prozessdruck, einer Temperatur oder einer Konzentration der Zulaufflüssigkeit ab. Bei der beschriebenen Regelung ist es möglich, die Permeat-Ausbeute ohne Kenntnis der Einflussgrößen und/oder bei sich ändernden Einflussgrößen auf einen Soll-Wert zu regulieren. Sofern ein Soll-Wert technisch nicht erreichbar ist, wird die Permeat-Ausbeute in einer Ausgestaltung so reguliert, dass die Differenz zu dem Soll-Wert minimiert wird.

Die Vorrichtung 1 umfasst in vorteilhaften Ausgestaltungen eine nicht dargestellte Benutzerschnittestelle, an welcher ein Soll-Wert für die Permeat-Ausbeute, ein Soll-Wert für den Volumenstrom des Permeats und/oder ein Soll-Wert für einen Massenstrom des Permeats vorgebbar ist.

In die dargestellte Vorrichtung 1 ist die Funktion einer Verschneidung von Permeat mit einer Zulaufflüssigkeit, insbesondere einem Speisewasser, integriert. Das Permeat und die Zulaufflüssigkeit sind mittels der zwei Fittings 31, 32 an den zweiten Kanal via je eines Rückschlagventils 37 angeschlossen. In dem zweiten Kanal ist weiter ein Mischventil 8 vorgesehen, mit welchem eine Menge der Zulaufflüssigkeit einstellbar ist, welche dem Permeat zugemischt wird. In dem dargestellten Ausführungsbeispiel ist das Mischventil 8 als von außen manuell einstellbares Mischventil gestaltet. In anderen Ausgestaltungen ist eine automatisierte Einstellung realisiert.

Die dargestellte Vorrichtung 1 umfasst weiter eine als Leitfähigkeitsmesszelle ausgestaltete Sensoreinrichtung 9 zur Messung der lonenkonzentration. Die lonenkonzentration des "Mischwassers", d.h. des Gemischs aus Zulaufflüssigkeit und Permeat wird mit der Sensoreinrichtung 9 gemessen und beispielsweise an einem nicht dargestellten Display der Vorrichtung 1 angezeigt.

Zudem umfasst die dargestellte Vorrichtung 1 zwei Druck-Sensoreinrichtungen 10, 11 zur Überwachung des Druckes des Permeats und der Zulaufflüssigkeit und zur druckabhängigen Ein- und Ausschaltung der Membrantrennvorrichtung.

Fig. 2 zeigt den Grundkörper 2 gemäß Fig. 1 in einer Draufsicht. Der Grundkörper 2 weist an der dargestellten Oberseite zwei Ausnehmungen 204, 240 für das Stellglied 4 und den Stellmotor 40 gemäß Fig. 1, zwei Ausnehmungen 231, 232 für die Fittings 31, 32 gemäß Fig. 1 und eine Ausnehmung 209 für die Sensoreinrichtung 9 auf.

Die Gestaltung des Grundkörpers 2 ist besonders günstig hinsichtlich ihrer Kompaktheit. In anderen Ausgestaltungen sind jedoch andere Formen vorgesehen, in welchem beispielsweise die Kanäle parallel zueinander verlaufen.

## Patentansprüche

1. Als Baueinheit an eine Membrantrennvorrichtung montierbare oder in eine Membrantrennvorrichtung integrierbare Vorrichtung zum Betreiben der Membrantrennvorrichtung im Durchflussverfahren, wobei eine Zulaufflüssigkeit in der Membrantrennvorrichtung in ein Konzentrat und einen Permeat auftrennbar ist und eine Durchflussmenge des Permeats und/oder eine Permeat-Ausbeute von mindestens einer im Betrieb variablen Einflussgröße abhängig ist, umfassend einen Grundkörper (2) mit mindestens einem ersten, von dem Konzentrat durchströmbaren Kanal und mindestens einem zweiten, von dem Permeat durchströmbaren Kanal und eine Regelvorrichtung, wobei an der Regelvorrichtung ein Soll-Wert für die Durchflussmenge des Permeats und/oder die Permeat-Ausbeute vorgebbar ist, und die Regelvorrichtung zur Kompensation einer Änderung der mindestens einen variablen Einflussgröße eine Steuereinheit (5) zum Generieren eines Stellsignals für eine Durchflussmenge des Konzentrats umfasst, um die Durchflussmenge des Permeats auf den Soll-Wert zu regulieren und/oder um die Permeat-Ausbeute auf den Soll-Wert zu regulieren, wobei in dem mindestens einen ersten Kanal ein mittels des Stellsignals ansteuerbares Stellglied (4) zum Variieren des der Durchflussmenge des Konzentrats und mindestens eine Sensoreinrichtung (6) zum Erfassen der Durchflussmenge des Konzentrats und in dem mindestens einen zweiten Kanal eine zweite Sensoreinrichtung (7) zum Erfassen der Durchflussmenge des Permeats in dem mindestens einen zweiten Kanal vorgesehen sind und dem ersten oder dem zweiten Kanal eine lonenkonzentration-Sensoreinrichtung (9) zur Erfassung einer lonenkonzentration zugeordnet ist.

2. Vorrichtung nach Anspruch 1, **dadurch gekennzeichnet, dass** als Stellglied (4) ein ansteuerbares Ventil zum Variieren des der Durchflussmenge des Konzentrats in dem mindestens einen ersten Kanal vorgesehen ist.

3. Vorrichtung nach Anspruch 1, **dadurch gekennzeichnet, dass** der mindestens eine zweite Kanal einen Anschluss für das Permeat, einen zweiten Anschluss für die Zulaufflüssigkeit und ein Mischventil (8), insbesondere ein ansteuerbares Mischventil, aufweist.

4. Vorrichtung nach einem der Ansprüche 1 bis 3, **dadurch gekennzeichnet**, die lonenkonzentration-Sensoreinrichtung (9) zur Erfassung einer lonenkonzentration dem zweiten Kanal zugeordnet ist.

5. Vorrichtung nach einem der Ansprüche 1 bis 4, **dadurch gekennzeichnet, dass** mindestens einem Kanal, vorzugsweise dem zweiten Kanal, mindestens eine Druck-Sensoreinrichtung (10, 11) zur Erfassung eines Drucks zur druckabhängigen Ein- und Ausschaltung der Membrantrennvorrichtung zugeordnet ist.

6. Vorrichtung nach einem der Ansprüche 1 bis 5, **dadurch gekennzeichnet, dass** mindestens eine Benutzerschnittstelle zur Eingabe und/oder Anzeige von Soll- und/oder Ist-Werten betreffend das Konzentrat und/oder das Permeat vorgesehen ist.

7. Verfahren zum Betreiben einer Membrantrennvorrichtung im Durchflussverfahren **in einer Vorrichtung gemäß einem der vorhergehenden Ansprüche**, wobei eine Zulaufflüssigkeit in der Membrantrennvorrichtung in ein Konzentrat und ein Permeat aufgetrennt wird und eine Durchflussmenge des Permeats und/oder eine Permeat-Ausbeute von mindestens einer im Betrieb variablen Einflussgröße beeinflusst wird,
**wobei**
die Durchflussmenge des Permeats und/oder die Permeat-Ausbeute auf einen Soll-Wert reguliert wird, wobei
zur Kompensation einer Änderung der mindestens einen variablen Einflussgröße eine Durchflussmenge des Konzentrats variiert wird, um die Durchflussmenge des Permeats auf den Soll-Wert zu regulieren und/oder um die Permeat-Ausbeute auf den Soll-Wert zu regulieren.

## Claims

1. Device that can be mounted as a structural unit on a membrane separation apparatus or integrated into a membrane separation apparatus for operating the membrane separation apparatus in the throughflow method, wherein a feed liquid can be separated in the membrane separation apparatus into a concentrate and a permeate, and a flow rate of the permeate and/or a permeate yield depends on at least one influencing variable that varies during operation, comprising a base body (2) having at least one first channel through which the concentrate can flow and at least one second channel through which the permeate can flow, and a control device, wherein a desired value for the flow rate of the permeate and/or the permeate yield can be predefined on the control device and the control device comprises a control unit (5) for generating an actuating signal for a flow rate of the concentrate in order to compensate for a change in the at least one variable influencing variable, in order to control the flow rate of the permeate to the desired value and/or to control the permeate yield to the desired value, wherein, in the at least one first channel, an actuator (4) that can be actuated by means of the actuating signal to vary the flow rate of the concentrate, and at least one sensor device (6) for measuring the flow rate of the concentrate are provided and, in the at least one second channel, a second sensor device (7) for measuring the flow rate of the permeate in the at least one second channel is provided, and an ion concentration sensor device (9) is assigned to the first or the second channel to measure an ion concentration.

2. Device according to Claim 1, **characterized in that** the actuator (4) provided is a controllable valve for varying the flow rate of the concentrate in the at least one first channel.

3. Device according to Claim 1, **characterized in that** the at least one second channel has a connection for the permeate, a second connection for the feed liquid and a mixing valve (8), in particular a controllable mixing valve.

4. Device according to one of Claims 1 to 3, **characterized in that** the ion concentration sensor device (9) for measuring an ion concentration is assigned to the second channel.

5. Device according to one of Claims 1 to 4, **characterized in that** at least one channel, preferably the second channel, is assigned at least one pressure sensor device (10, 11) for measuring a pressure for switching the membrane separation apparatus on and off as a function of pressure.

6. Device according to one of Claims 1 to 5, **characterized in that** at least one user interface is provided for the input and/or display of desired and/or actual values relating to the concentrate and/or the permeate.

7. Method for operating a membrane separation apparatus in the throughflow method in a device according to one of the preceding claims, wherein a feed liquid is separated in the membrane separation apparatus into a concentrate and a permeate, and a flow rate of the permeate and/or a permeate yield is influenced by at least one influencing variable that varies during operation,
wherein
the flow rate of the permeate and/or the permeate yield are/is controlled to a desired value,
wherein
to compensate for a change in the at least one variable influencing variable, a flow rate of the concentrate is varied in order to control the flow rate of the permeate to the desired value and/or to control the permeate yield to the desired value.

## Revendications

1. Dispositif pouvant être monté sur un dispositif de séparation à membrane ou intégré dans un dispositif de séparation à membrane en tant qu'unité modulaire pour faire fonctionner le dispositif de séparation à membrane dans un processus d'écoulement, dans lequel un liquide d'alimentation dans le dispositif de séparation à membrane peut être séparé en un concentré et un perméat et un débit du perméat et/ou un flux de perméat dépendent au moins d'une grandeur d'influence variable pendant l'utilisation, comprenant un corps principal (2) avec au moins un premier canal à travers lequel le concentré peut s'écouler et au moins un second canal à travers lequel le perméat peut s'écouler, et un dispositif de régulation, une valeur de consigne pour le débit du perméat et/ou pour le rendement de perméat produite pouvant être prédéterminée au niveau du dispositif de commande, et le dispositif de régulation pour compenser une variation de l'au moins une grandeur d'influence variable comprenant une unité de commande (5) pour générer un signal de commande pour un débit du concentré, pour régler le débit du perméat à la valeur de consigne et/ou régler le rendement de perméat produite à la valeur de consigne, dans l'au moins un premier canal étant prévus un composant de réglage (4) pouvant être actionné au moyen du signal de commande pour faire varier le débit du concentré et au moins un moyen de détection (6) pour détecter le débit du concentré dans l'au moins dans un second canal étant prévu un second moyen de détection (7) pour détecter le débit du perméat dans l'au moins un second canal et dans le premier ou le second canal est installé un dispositif capteur de concentration ionique (9) destiné à détecter une concentration des ions.

2. Dispositif selon la revendication 1, **caractérisé en ce qu'**une vanne contrôlable est prévue en tant que dispositif de commande (4)pour faire varier le débit du concentré dans le premier canal ou les premiers canaux.

3. Dispositif selon la revendication 1, **caractérisé en ce que** le second canal ou les seconds canaux présentent une connexion pour le perméat, une seconde connexion pour le liquide d'alimentation et une vanne de mélange (8), en particulier une vanne de mélange contrôlable.

4. Dispositif selon l'une des revendications 1 à 3, **caractérisé en ce que** le moyen capteur de concentration ionique (9) est associé au second canal pour détecter une concentration des ions.

5. Dispositif selon l'une des revendications 1 à 4, **caractérisé en ce qu'**au moins un canal, de préférence le second canal, est associé à au moins un dispositif capteur de pression (10, 11) pour détecter une pression pour l'activation et la désactivation en fonction de la pression du dispositif de séparation à membrane.

6. Dispositif selon l'une des revendications 1 à 5, **caractérisé en ce qu'**au moins une interface utilisateur est prévue pour entrer et/ou afficher des valeurs de consigne et/ou des valeurs réelles relatives au concentré et/ou au perméat.

7. Procédé pour faire fonctionner un dispositif de séparation à membrane dans le procédé d'écoulement **dans un dispositif selon l'une des revendications précédentes**, dans lequel un liquide d'alimentation dans le dispositif de séparation à membrane peut être séparé en un concentré et un perméat et un débit du perméat et/ou un flux de perméat peut être influencé par au moins une grandeur d'influence variable pendant l'utilisation,
**dans lequel**
le débit du perméat et/ou le rendement de perméat produite sont réglés à une valeur de consigne, dans lequel
pour compenser une variation de l'au moins une grandeur d'influence variable, on fait varier un débit du concentré pour régler le débit du perméat à la valeur de consigne et/ou pour régler le rendement de perméat produite à la valeur de consigne.
